(19) Europäisches Patentamt
European Patent Office
Office européen des brevets

(11) EP 1 607 242 A1

(12) EUROPEAN PATENT APPLICATION

(43) Date of publication:
**21.12.2005 Bulletin 2005/51**

(51) Int Cl.7: **B60C 1/00**, C08K 5/20, C08K 3/00, C08L 21/00

(21) Application number: **05105067.2**

(22) Date of filing: **09.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **16.06.2004 US 869104**

(71) Applicant: **THE GOODYEAR TIRE & RUBBER COMPANY**
**Akron, Ohio 44316-0001 (US)**

(72) Inventors:
- **D'Sidocky, Richard Michael**
  **44266, Ravenna (US)**
- **Varner, John Eugene**
  **44203, Norton (US)**
- **Lay, Donald Ray**
  **44266, Ravenna (US)**
- **Keith, Denise Jeannette**
  **44306, Akron (US)**
- **Gordon, Larry Ashley**
  **44312, Akron (US)**

(74) Representative: **Kutsch, Bernd**
**Goodyear S.A.,**
**Patent Department,**
**Avenue Gordon Smith**
**7750 Colmar-Berg (LU)**

# (54) Pneumatic tire having a rubber component containing N,N'-(m-phenylene) bismaleamic acid

(57) The present invention relates to a pneumatic tire having a rubber component comprising:

(a) 100 parts by weight of at least one elastomer containing olefinic unsaturation;
(b) 10 to 120 phr of carbon black;
(c) 10 to 120 phr of silica; and
(d) 0.1 to 10 phr of N, N'-(m-phenylene) bismaleamic acid.

EP 1 607 242 A1

## Description

### Background of the Invention

US-A- 5,696,188 relates to rubber compounds containing bis citraconamic acids including N, N'-(m-phenylene) bis citraconamic acid:

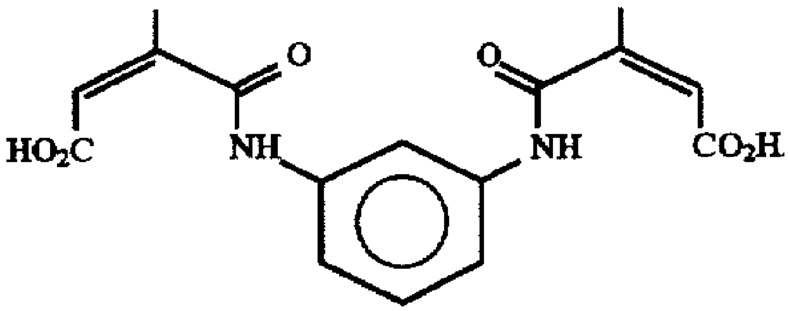

In rubber compounds containing only carbon black as the filler, the performance of N, N'-(m-phenylene) bismaleamic acid is shown to be inferior to that of N, N'-(m-phenylene) bis citraconamic acid.

### Summary of the Invention

The present invention relates to a pneumatic tire having a rubber component containing N, N'-(m-phenylene) bismaleamic acid.

### Detailed Description of the Invention

There is disclosed a pneumatic tire having a rubber component according to claim 1.

The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials, and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. The preferred rubber or elastomers are natural rubber, polybutadiene and SBR.

In one aspect, the rubber is preferably of at least two of diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 10 to 28 percent bound styrene or, for some applications, an E-SBR having a medium to relatively high bound styrene content, namely, a bound styrene content of 30 to 45 percent.

The relatively high styrene content of 30 to 45 for the E-SBR can be considered beneficial for a purpose of enhancing traction, or skid resistance, of the tire tread. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene-based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

A purpose of using S-SBR is for improved tire rolling resistance as a result of lower hysteresis when it is used in a tire tread composition.

The 3,4-polyisoprene rubber (3,4-PI) is considered beneficial for a purpose of enhancing the tire's traction when it is used in a tire tread composition. The 3,4-PI and use thereof is more fully described in US-A-5,087,668 which is incorporated herein by reference. The Tg refers to the glass transition temperature which can conveniently be determined by a differential scanning calorimeter at a heating rate of 10°C per minute.

The cis 1,4-polybutadiene rubber (BR) is considered to be beneficial for a purpose of enhancing the tire tread's wear, or treadwear. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The pneumatic tire of the present invention is of conventional design having (a) a carcass reinforced with biased or radially-extending cords, two axially-spaced bead portions, two axially-spaced sidewall portions, one adjacent to each bead portion and a crown portion intermediate the sidewall portions, (b) a circumferentially extending belt structure radially outwardly of the carcass at the crown portion and (c) a tread section radially outwardly of the belt structure. The rubber component of the tire of the present invention which contains the N, N'-(m-phenylene) bismaleamic acid may be located in the carcass, part of the belt structure and/or tread. For example, as part of the carcass, the component may be the apex, wirecoat, ply coat, squeegee compounds, gum strips, chafer, reinforcing sidewall inserts or exposed sidewall. As part of the tread section, the component may be the tread base or tread cap. The compound may also be the innerliner.

The rubber composition for use in the rubber component of the tire of the present invention contains N, N'-(m-phenylene) bismaleamic acid:

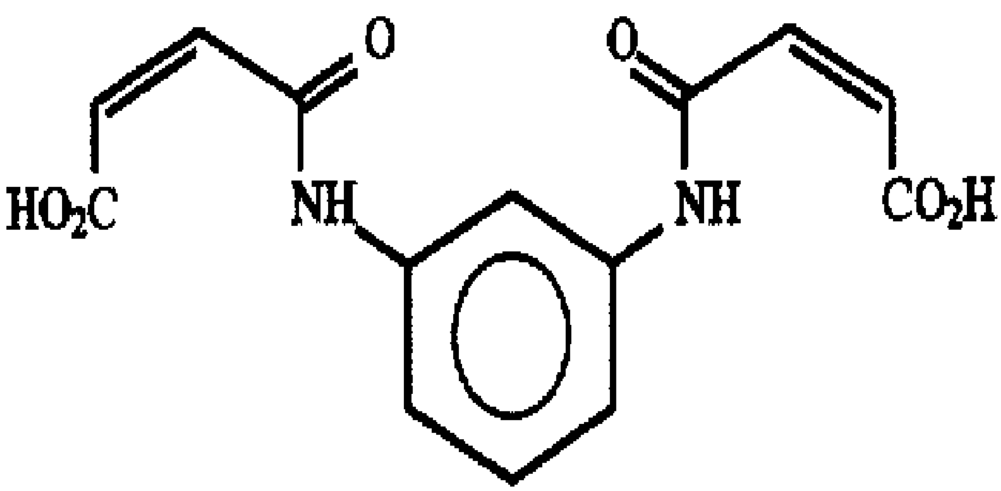

The N, N'-(m-phenylene) bismaleamic acid used in the present invention may be present at various levels in

the rubber compounds of the present invention. For example, the level of N, N'-(m-phenylene) bismaleamic acid may range from 0.1 to 10.0 by weight per 100 parts of rubber (also known as "phr"). Preferably, the level of N, N'-(m-phenylene) bismaleamic acid ranges from 0.5 to 5.0 phr.

The rubber composition contains carbon black and silica to contribute the desired properties of the rubber component. The combined carbon black and silica fillers may be used in conventional amounts ranging from 20 to 240 phr. For example, when used, the silica filler may be added in amounts ranging from 10 to 120 phr. Preferably, the silica is present in an amount ranging from 20 to 80 phr.

The commonly employed siliceous pigments used in rubber compounding applications can be used as the silica in this invention, including pyrogenic and precipitated siliceous pigments (silica) and aluminosilicates, although precipitate silicas are preferred. The siliceous pigments preferably employed in this invention are precipitated silicas such as, for example, those obtained by the acidification of a soluble silicate, e.g., sodium silicate.

Such silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, page 304 (1938).

The silica may also be typically characterized by having a dibutylphthalate (DBP) absorption value in a range of 100 to 400, and more usually 150 to 300.

Further, the silica, as well as the aforesaid alumina and aluminosilicate may be expected to have a CTAB surface area in a range of 100 to 220. The CTAB surface area is the external surface area as evaluated by cetyl trimethylammonium bromide with a pH of 9. The method is described in ASTM D 3849 for set up and evaluation.

Mercury surface area/porosity is the specific surface area determined by Mercury porosimetry. For such technique, mercury is penetrated into the pores of the sample after a thermal treatment to remove volatiles. Set-up conditions may be suitably described as using a 100 mg sample; removing volatiles during 2 hours at 105°C and ambient atmospheric pressure; ambient to 2000 bars pressure measuring range. Such evaluation may be performed according to the method described in Winslow, Shapiro in ASTM bulletin, p.39 (1959) or according to DIN 66133. For such an evaluation, a CARLO-ERBA Porosimeter 2000 might be used.

The average mercury porosity specific surface area for the silica should be in a range of 100 to 300 $m^2/g$.

A suitable pore-size distribution for the silica, alumina and aluminosilicate according to such mercury porosity evaluation is considered herein to be five percent or less of its pores have a diameter of less than 10 nm; 60 to 90 percent of its pores have a diameter of 10 to 100 nm; 10 to 30 percent of its pores have a diameter of 100 to 1000 nm; and 5 to 20 percent of its pores have a diameter of greater than 1000 nm.

The silica might be expected to have an average ultimate particle size, for example, in the range of 0.01 to 0.05 micron as determined by the electron microscope, although the silica particles may be even smaller, or possibly larger, in size.

Various commercially available silicas may be considered for use in this invention such as, only for example herein, and without limitation, silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2, VN3, BV3380GR, etc, and silicas available from Huber, for example Huber Sil 8745.

As can be appreciated by one skilled in the art, it may be desirable to add to the silica containing rubber compound a sulfur containing organosilicon compound. Examples of suitable sulfur containing organosilicon compounds are of the formula:

Z-Alk-Sn-Alk-Z     II

in which Z is selected from the group consisting of

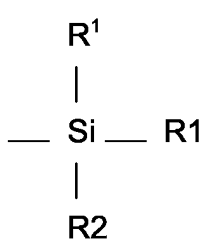 , 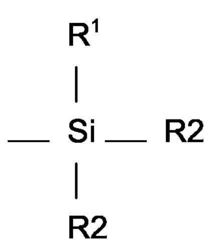 and 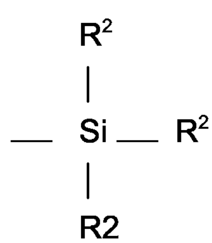

where $R^1$ is an alkyl group of 1 to 4 carbon atoms, cyclohexyl or phenyl;

$R^2$ is alkoxy of 1 to 8 carbon atoms, or cycloalkoxy of 5 to 8 carbon atoms;

Alk is a divalent hydrocarbon of 1 to 18 carbon atoms, and n is an integer of 2 to 8.

Specific examples of sulfur containing organosilicon compounds of Formula II which may be used in accordance with the present invention include: 3,3'-bis(di t-butylmethoxysilylpropyl) tetrasulfide, 2,2'-bis(phenyl methyl methoxysilylethyl) trisulfide, 3,3'-bis(diphenyl isopropoxysilylpropyl) tetrasulfide, 4,4'-bis(trimethoxysilylbutyl) tetrasulfide, 6,6'-bis(triethoxysilylhexyl) tetrasulfide.

The preferred sulfur containing organosilicon compounds of Formula II are the 3,3'-bis(trimethoxy or triethoxy silylpropyl) sulfides. The most preferred compounds are 3,3'-bis(triethoxysilylpropyl) tetrasulfide and 3,3'-bis(triethoxysilylpropyl) disulfide. Preferably Z is

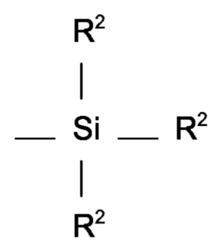

where $R^2$ is an alkoxy of 2 to 4 carbon atoms, with 2 carbon atoms being particularly preferred; Alk is a divalent hydrocarbon of 2 to 4 carbon atoms with 3 carbon atoms being particularly preferred; and n is an integer of from 2 to 4.

The amount of the above sulfur containing organosilicon compound of Formula II in a rubber composition will vary depending on the level of silica that is used. Generally speaking, the amount of the compound of Formula II will range from 0 to 1.0 parts by weight per part by weight of the silica. Preferably, the amount will range from 0 to 0.4 parts by weight per part by weight of the silica.

The commonly employed and commercially available carbon blacks used in rubber compounding applications can be used in the compositions of the present invention. Representative examples of such carbon blacks include those known by the following ASTM designations, N110, N121, N134, N205, N220, N231, N234, N242, N293, N299, S315, N326, N330, N332, N339, N343, N347, N351, N358, N375, N472, N539, N550, N582, N630, N642, N650, N660, N683, N754, N762, N765, N774, N787, N907, N908, N990 and N991. The amount of carbon black may vary from 10 to 120 phr. Preferably, the amount of carbon black will range from 20 to 80 phr. It is to be appreciated that a silica coupler may be used in conjunction with a carbon black (namely, pre-mixed with a carbon black prior to addition to the rubber composition) and such carbon black is to be included in the aforesaid amount of carbon black for the rubber composition formulation.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, modified starches, pigments, fatty acid, zinc oxide, waxes, antioxidants and antiozonants and peptizing agents. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 0.5 to 6 phr being preferred. Typical amounts of tackifier or pre-reacted resins comprise 0.5 to10 phr, usually 1 to 5 phr. Typical amounts of processing aids comprise 1 to 50 phr. Such processing aids can include, for example, aromatic, napthenic and/or paraffinic processing oils. Typical amounts of antioxidants comprise 1 to 5 phr. Representative antioxidants may be, for example, monophenols, bisphenols and others, such as, for example, those disclosed in The Vanderbilt Rubber Handbook (1978), pages 344-346. Typical amounts of antiozonants comprise 1 to 5 phr. Representative examples of such antiozonants may be, for example, paraphenylenediamines such as diaryl-p-phenylenediamines, dialkyl-p-phenylenediamine and alkyl-aryl-p-phenylenediamines.

In one aspect of the present invention, the sulfur-vulcanizable rubber composition is then sulfur-cured or vulcanized.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts,

such as from 0.05 to 3 phr, in order to activate and to improve the properties of the vulcanizate.

The rubber compositions of the present invention may contain a methylene donor and a methylene acceptor. The term "methylene donor" is intended to mean a compound capable of reacting with a methylene acceptor (such as resorcinol or its equivalent containing a present hydroxyl group) and generate the resin in-situ. Examples of methylene donors which are suitable for use in the present invention include hexamethylenetetramine, hexaethoxymethylmelamine, hexamethoxymethylmelamine, lauryloxymethylpyridinium chloride, ethoxymethylpyridinium chloride, trioxan hexamethoxymethylmelamine, the hydroxy groups of which may be esterified or partly esterified, and polymers of formaldehyde such as paraformaldehyde. In addition, the methylene donors may be N-substituted oxymethylmelamines. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N, N',N"-tris(methoxymethyl)melamine and N,N'N"-tributyl-N,N',N"-trimethylol-melamine. The N-methylol derivatives of melamine are prepared by known methods.

Typically, the amount of methylene donor and methylene acceptor that each is present will range from 0.1 phr to 10.0 phr. Preferably, the amount of methylene donor and methylene acceptor that each is present ranges from 2.0 phr to 5.0 phr.

The weight ratio of methylene donor to the methylene acceptor may vary. Generally speaking, the weight ratio will range from 1:10 to 10:1. Preferably, the weight ratio ranges from 1:3 to 3:1.

When the compound of the present invention is used as a wire coat or bead coat for use in a tire, an organo-cobalt compound may be present which serves as a wire adhesion promoter. When used, any of the organo-cobalt compounds known in the art to promote the adhesion of rubber to metal may be used. Thus, suitable organo-cobalt compounds which may be employed include cobalt salts of fatty acids such as stearic, palmitic, oleic, linoleic and the like; cobalt salts of aliphatic or alicyclic carboxylic acids having from 6 to 30 carbon atoms; cobalt chloride, cobalt naphthenate; cobalt carboxylate and an organo-cobalt-boron complex commercially available under the designation Manobond C from Wyrough and Loser, Inc, Trenton, New Jersey.

Amounts of organo-cobalt compound which may be employed depend upon the specific nature of the organo-cobalt compound selected, particularly the amount of cobalt metal present in the compound. Since the amount of cobalt metal varies considerably in organo-cobalt compounds which are suitable for use, it is most appropriate and convenient to base the amount of the organo-cobalt compound utilized on the amount of cobalt metal desired in the finished stock composition. Accordingly, it may in general be stated that the amount of organo-cobalt compound present in the stock composition should be sufficient to provide from 0.01 percent to 0.35 percent by weight of cobalt metal based upon total weight of the rubber stock composition with the preferred amounts being from 0.03 percent to 0.2 percent by weight of cobalt metal based on total weight of skim stock composition.

The mixing of the rubber composition can be accomplished by methods known to those having skill in the rubber mixing art. For example the ingredients are typically mixed in at least two stages, namely at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber, silica, compound of Formula II and carbon black, if used, are mixed in one or more non-productive mix stages. The N, N'-(m-phenylene) bismaleamic acid may be added at any stage of mixing but is preferably added in a nonproductive stage. The rubber composition containing the rubber and generally at least part of the silica should, as well as the sulfur-containing organosilicon compound of Formula II, if used, be subjected to a thermomechanical mixing step. The thermomechanical-mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

The above tread rubber composition is used to prepare an assembly of a tire with a tread comprised of the said rubber composition. Such tire is then vulcanized.

Accordingly, the invention contemplates a vulcanized tire prepared with the N, N'-(m-phenylene) bismaleamic acid described herein.

Vulcanization of the pneumatic tire of the present invention is generally carried out at conventional temperatures ranging from 100°C to 200°C. Any of the usual vulcanization processes may be used such as heating in a press or mold, heating with superheated steam or hot air or in a salt bath.

The pneumatic tire of the present invention may be a passenger tire, aircraft tire, agricultural, earthmover, off-the-road, all truck tire. Preferably, the tire is a passenger or truck tire. The tire may also be a radial or bias, with a radial tire being preferred.

The invention is further illustrated by the following example.

Example 1

In this example, the effect of adding N, N'-(m-phenylene) bismaleamic acid in a rubber compound with silica and carbon black is illustrated. Table 1 below shows the basic rubber compound that was used in this example. The rubber compound was prepared in a three-stage Banbury mix. All parts and percentages are by weight unless otherwise noted. The cure data as well as other physical data for each sample are listed in Tables 2, 3 and 4.

Cure properties were determined using a Monsanto oscillating disc rheometer (MDR) which was operated at a temperature of 170°C and at a frequency of 11 Hertz. A description of oscillating disc rheometers can be found in The Vanderbilt Rubber Handbook edited by Robert O. Ohm (Norwalk, Conn., R. T. Vanderbilt Company, Inc., 1990), pages 554-557. The use of this cure meter and standardized values read from the curve are specified in ASTM D-2084. A typical cure curve obtained on an oscillating disc rheometer is shown on page 555 of the 1990 edition of The Vanderbilt Rubber Handbook. Viscoelastic properties Tan Delta and G' were measured at 10% strain using an Alpha Technologies Rubber Process Analyzer (RPA). A description of the RPA 2000, its capability, sample preparation, tests and subtests can be found in these references. H A Pawlowski and J S Dick, Rubber World, June 1992; J S Dick and H A Pawlowski, Rubber World, January 1997; and J S Dick and J A Pawlowski, Rubber & Plastics News, Apr. 26 and May 10, 1993.

Tensile properties were measured following ASTM-D412.

Table 1:

| Rubber Compound Formulation | | | | | | |
|---|---|---|---|---|---|---|
| Type | Ctrl | Ctrl | Ctrl | Exp | Ctrl | Exp |
| Sample | 1 | 2 | 3 | 4 | 5 | 6 |
| Natural Rubber | 100 | 100 | 100 | 100 | 100 | 100 |
| Carbon Black[1] | 45 | 45 | 30 | 30 | 15 | 15 |
| Silica[2] | 0 | 0 | 16 | 16 | 32.5 | 32.5 |
| Waxes[3] | 1.5 | 1.5 | 1.5 | 1.5 | 1.5 | 1.5 |
| Stearic Acid | 1 | 1 | 1 | 1 | 1 | 1 |
| Zinc Oxide | 4 | 4 | 4 | 4 | 4 | 4 |
| Antidegradants[4] | 1 | 1 | 1 | 1 | 1 | 1 |
| Mpd Bismaleamic Acid[5] | 0 | 2 | 0 | 2 | 0 | 4.1 |
| Accelerator[6] | 1.2 | 1.2 | 1.2 | 1.2 | 1.2 | 1.2 |
| Sulfur | 1.2 | 1.2 | 1.2 | 1.2 | 1.2 | 1.2 |

[1] N205 type carbon black
[2] HuberSil 8745 from JP Huber Corp.
[3] microcrystalline and paraffinic
[4] quinoline type
[5] N, N'(m-phenzlene) bismaleamic acid
[6] sulfenamide type

Table 2:

| MDR @ 170°C | | | | | | |
|---|---|---|---|---|---|---|
| Sample Number | 1 | 2 | 3 | 4 | 5 | 6 |
| Sample Cure Time at 170°C; min. | 5 | 5 | 5 | 9 | 5 | 9 |
| Maximum Torque, dNm | 13.7 | 12.5 | 9.5 | 10.6 | 8.4 | 9.1 |
| Minimum Torque, dNm | 2.1 | 2.1 | 2.0 | 2.2 | 2.0 | 2.2 |
| Time to Max. Torque, Min. | 5.2 | 6.5 | 4.3 | 8.2 | 5.4 | 8.4 |

Table 3:

| Tensile Properties | | | | | | |
|---|---|---|---|---|---|---|
| Sample Number | 1 | 2 | 3 | 4 | 5 | 6 |
| 300% of Control | 11.3 | 9.9 | 7.7 | 9.4 | 5.4 | 8.0 |
| % of Control | - | 87 | - | 122 | - | 149 |
| Tensile Strength, MPa | 26.9 | 22.6 | 18.7 | 16.0 | 16.1 | 17.8 |
| Elongation at Break, % | 529 | 506 | 486 | 412 | 531 | 463 |

Table 4:

| RPA @ 170°C | | | | | | |
|---|---|---|---|---|---|---|
| Sample Number | 1 | 2 | 3 | 4 | 5 | 6 |
| Sample Cure Time at 170°C; min. | 5 | 5 | 5 | 9 | 5 | 9 |
| aging time at 140°C | G'(kPa) @ 10% strain | | | | | |
| 0 hr | 1156 | 1091 | 860 | 991 | 841 | 969 |
| 1.5 hr | 1143 | 1173 | 780 | 968 | 797 | 949 |
| 3.0 hr | 1095 | 1138 | 735 | 952 | 784 | 937 |
| 4.5 hr | 1073 | 1124 | 717 | 947 | 775 | 935 |
| 6.0 hr | 1057 | 1115 | 705 | 939 | 761 | 925 |
| aging time at 140°C | Tan Delta @ 10% strain | | | | | |
| 0 hr | 0.15 | 0.18 | 0.15 | 0.15 | 0.19 | 0.16 |
| 1.5 hr | 0.17 | 0.18 | 0.19 | 0.17 | 0.22 | 0.17 |
| 3.0 hr | 0.18 | 0.19 | 0.20 | 0.18 | 0.23 | 0.17 |
| 4.5 hr | 0.18 | 0.19 | 0.21 | 0.18 | 0.24 | 0.17 |
| 6.0 hr | 0.19 | 0.19 | 0.22 | 0.18 | 0.24 | 0.18 |

As seen in the data of Tables 2, 3 and 4, N,N'-(m-phenylene)bis maleamic acid shows utility in rubber compounds containing silica as part of the filler system. Advantages include increases in cured stiffness and lower hysteresis over controls not containing N, N'-(m-phenylene) bismaleamic acid. Control Sample 1 and control Sample 2 show that N, N'-(m-phenylene) bismaleamic acid has no effect on the stiffness of the compound when comparing 300% modulus (as in Table 2) or dynamic modulus G' at 10% strain before an aging period of six hours at 140°C is instituted. Actually the stiffness reflected by these two measurements decreases with the addition of N, N'-(m-phenylene) bismaleamic acid. This is in agreement with the prior art which shows the same trend (see U.S. Patent No. 5,696,188 Tables I, II, and IV Sample No. ctrl 1, ctrl 3). When control Sample 1 is reformulated to contain silica in place of carbon black (volume % of total filler maintained) as in control Sample 3 and control Sample 5 followed by the addition of N, N'-(m-phenylene) bismaleamic acid as in experimental Sample 4 and experimental Sample 6 respectively (N, N'-(m-phenylene) bismaleamic acid is 12.5 wt % based on silica level), increases in 300% M and G' are noted. Also note that during the 140°C aging period in the RPA test the tan delta value is lower for experimental Sample 4 and experimental Sample 6 versus their control counterparts while for the all carbon black compound, no advantage in tan delta is seen. It is desirable to have the ability to increase stiffness with reducing tan delta in tread compounds for improved handling and better fuel economy/durability.

## Claims

1. A pneumatic tire having a rubber component comprising by

(a) 100 parts by weight of at least one elastomer containing olefinic unsaturation;
(b) 10 to 120 phr of carbon black;
(c) 10 to 120 phr of silica; and
(d) 0.1 to 10 phr of N, N'-(m-phenylene) bismaleamic acid.

**2.** The pneumatic tire of claim 1, wherein said elastomer containing olefinic unsaturation is selected from the group consisting of natural rubber, neoprene, polyisoprene, butyl rubber, polybutadiene, styrene-butadiene copolymer, styrene/isoprene/butadiene rubber, methyl methacrylate-butadiene copolymer, isoprene-styrene copolymer, methyl methacrylate-isoprene copolymer, acrylonitrile-isoprene copolymer, acrylonitrile-butadiene copolymer, EPDM and mixtures thereof.

**3.** The pneumatic tire of claim 1 or 2, wherein said N, N'-(m-phenylene) bismaleamic acid is present in an amount ranging from 0.5 to 5 phr.

**4.** The pneumatic tire of claim 1, wherein said silica is precipitated silica.

**5.** The pneumatic tire of at least one of the previous claims, wherein a sulfur containing organosilicon compound is present in said rubber component which is of the formula:

$$Z\text{-}Alk\text{-}Sn\text{-}Alk\text{-}Z$$

in which Z is selected from the group consisting of

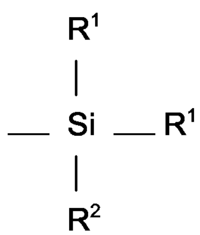 , 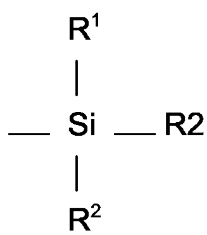 and 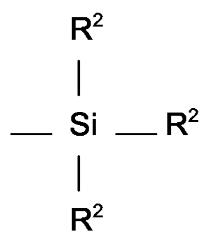

where $R^1$ is an alkyl group of 1 to 4 carbon atoms, cyclohexyl or phenyl;
$R^2$ is alkoxy of 1 to 8 carbon atoms, or cycloalkoxy of 5 to 8 carbon atoms;
Alk is a divalent hydrocarbon of 1 to 18 carbon atoms, and n is an integer of 2 to 8.

**6.** The pneumatic tire of at least one of the previous claims, wherein said silica is present in an amount ranging from 20 to 80 phr.

**7.** The pneumatic tire of at least one of the previous claims, wherein said carbon black is present in an amount ranging from 20 to 80 phr.

**8.** The pneumatic tire of at least one of the previous claims, wherein said tire has a carcass reinforced with radially-extending cords, a circumferentially- extending sidewall portion, and a tread section.

**9.** The pneumatic tire of at least one of the previous claims, wherein said rubber component is part of the carcass.

**10.** The pneumatic tire of at least one of the previous claims, wherein said rubber component is selected from the group consisting of the apex, wirecoat, ply coat, squeegee compounds, gum strips, chafer, reinforcing sidewall inserts, exposed sidewall, innerliner and tread.

European Patent Office

# EUROPEAN SEARCH REPORT

Application Number
EP 05 10 5067

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 433 114 A (CORAN ET AL) 21 February 1984 (1984-02-21)<br>* abstract; claims; example XII *<br>* column 4, line 4 - line 5 *<br>* column 6, line 18 - line 32 *<br>* column 25, line 53 - line 62 *<br>----- | 1-4,6-10 | B60C1/00<br>C08K5/20<br>C08K3/00<br>C08L21/00 |
| Y | EP 1 241 212 A (THE GOODYEAR TIRE & RUBBER COMPANY) 18 September 2002 (2002-09-18)<br>* abstract; claims; tables *<br>* page 7, line 25 - line 37 *<br>----- | 1-10 | |
| Y | GB 880 596 A (UNITED STATES RUBBER COMPANY) 25 October 1961 (1961-10-25)<br>* claims; examples *<br>* page 2, line 3 - line 4 *<br>----- | 1-10 | |
| Y | EP 1 226 982 A (THE GOODYEAR TIRE & RUBBER COMPANY) 31 July 2002 (2002-07-31)<br>* abstract; claims; tables *<br>* page 8, line 42 - line 46 *<br>----- | 1-10 | TECHNICAL FIELDS SEARCHED (Int.Cl.7) |
| Y | US 2002/177641 A1 (EZAWA NAOFUMI ET AL) 28 November 2002 (2002-11-28)<br>* abstract; claims; tables *<br>* paragraphs [0042], [0043] *<br>----- | 1-10 | C08K |

The present search report has been drawn up for all claims

| Place of search | Date of completion of the search | Examiner |
|---|---|---|
| The Hague | 1 September 2005 | Mettler, R-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1
EPO FORM 1503 03.82 (P04C01)

## ANNEX TO THE EUROPEAN SEARCH REPORT ON EUROPEAN PATENT APPLICATION NO. EP 05 10 5067

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2005

| Patent document cited in search report | | Publication date | Patent family member(s) | | | Publication date |
|---|---|---|---|---|---|---|
| US 4433114 | A | 21-02-1984 | AU | 554766 | B2 | 04-09-1986 |
| | | | AU | 9061182 | A | 26-05-1983 |
| | | | CA | 1189231 | A1 | 18-06-1985 |
| | | | DE | 3266430 | D1 | 24-10-1985 |
| | | | EP | 0080451 | A1 | 01-06-1983 |
| | | | BR | 8206625 | A | 04-10-1983 |
| | | | JP | 58089633 | A | 28-05-1983 |
| | | | ZA | 8208428 | A | 28-09-1983 |
| EP 1241212 | A | 18-09-2002 | US | 2002174926 | A1 | 28-11-2002 |
| | | | BR | 0200739 | A | 07-01-2003 |
| | | | EP | 1241212 | A2 | 18-09-2002 |
| GB 880596 | A | 25-10-1961 | NONE | | | |
| EP 1226982 | A | 31-07-2002 | US | 6465581 | B1 | 15-10-2002 |
| | | | BR | 0200106 | A | 22-10-2002 |
| | | | EP | 1226982 | A1 | 31-07-2002 |
| US 2002177641 | A1 | 28-11-2002 | FR | 2790478 | A1 | 08-09-2000 |
| | | | JP | 2000313772 | A | 14-11-2000 |

EPO FORM P0459

For more details about this annex : see Official Journal of the European Patent Office, No. 12/82